# FASCICULE DE BREVET EUROPEEN

(11) **EP 2 870 057 B1**
(45) Date de publication et mention de la délivrance du brevet: **08.03.2017**
(21) Numéro de dépôt: 13730025.7
(22) Date de dépôt: 03.06.2013
(51) Int. Cl.: B62D 25/16

(54) **DISPOSITIF POUR LA FIXATION D'UNE AILE AVANT SUR UNE PAROI DE CAISSE D'UN VEHICULE**
VORRICHTUNG ZUR BEFESTIGUNG EINES VORDERFLÜGELS AN EINER FAHRZEUGKAROSSERIEWAND
DEVICE FOR ATTACHING A FRONT WING TO A VEHICLE BODYSHELL WALL

(30) Priorité: 05.07.2012 FR 1256458
(43) Date de publication de la demande: 13.05.2015
(73) Titulaire: Peugeot Citroën Automobiles SA, 78140 Vélizy Villacoublay (FR)
(72) Inventeur: JEANNEAU, Clement, F-92100 Boulogne Billancourt (FR); RIVERAIN, Thierry, F-45330 Malesherbes (FR); BRUNET, Mickael, F-77670 Vernou la Celle sur Seine (FR)
(74) Mandataire: Fosse, Danièle
(86) Numéro de dépôt international: PCT/FR2013/051251
(87) Numéro de publication internationale: WO 2014/006288

(56) Documents cités:
- FR-A1- 2 936 999
- JP-U- 63 057 181

## Description

L'invention concerne un dispositif pour la fixation d'une aile avant sur une paroi de caisse d'un véhicule au moyen d'un butoir.

Le côté avant d'un véhicule comporte généralement une aile avant qui est interposée longitudinalement entre un pare-choc avant et une porte avant du véhicule.

L'aile avant est positionnée et fixée sur la paroi de caisse de sorte que la peau du pare-choc et la porte avant affleurent avec l'aile avant et délimitent un jeu minimum, par soucis d'esthétisme.

De plus, une des préoccupations des constructeurs automobile est de limiter les coûts de réparation du véhicule, notamment en limitant le nombre de pièces dégradées en cas de choc du véhicule.

Les constructeurs effectuent un essai au cours duquel le véhicule est soumis à un choc frontal à faible vitesse, 16 kilomètres par heure par exemple, pour observer les dégradations engendrées sur le véhicule.

On observe que, même à faible vitesse, le pare-choc est entraîné vers l'arrière et il exerce un effort longitudinal vers l'arrière, sur la portion avant de l'aile.

L'aile répercute cet effort contre la porte avant qui risque d'être déformée et détériorée.

Le document FR-A-2833320 décrit et représente un dispositif de fixation d'une aile avant délimitant une encoche.

Le dispositif est équipé d'une patte de fixation qui est solidaire d'une paroi de la caisse du véhicule et qui comporte une première région de fixation de l'aile qui coopère avec l'encoche délimitée par l'aile, et une seconde région de guidage et de serrage de l'aile.

De plus, selon ce document, le dispositif comporte un pion de serrage qui coopère avec la patte de fixation pour serrer l'aile avant.

Bien que le dispositif décrit dans le document FR-A-2833320 permette la fixation de l'aile sur la paroi de caisse, rien n'est prévu pour permettre un positionnement précis de l'aile par rapport à la caisse.

De même, rien n'est prévu pour empêcher l'aile de reculer vers l'arrière en cas de choc à l'avant du véhicule.

FR 2 936 999 décrit une patte de fixation d'une aile sur la structure d'un véhicule présentant une première zone destinée à adapter le positionnement de l'aile par rapport à la porte lors de son montage sur la structure, et une deuxième zone destinée à limiter le mouvement de l'aile lors d'un choc frontal à faible vitesse.

L'invention vise à proposer un dispositif de fixation d'une aile avant permettant notamment de pallier ces inconvénients.

Dans ce but, l'invention propose un dispositif pour la fixation d'une aile avant sur une paroi de caisse d'un véhicule au moyen d'un butoir, l'aile avant et la paroi de caisse délimitant entre elles un espace transversal, le butoir comportant :
- une embase de fixation qui est fixée sur la paroi de caisse,
- une première portion de retenue, et
- une seconde portion de renfort, caractérisé en ce que l'aile comporte une première patte de retenue qui est fixée sur la première portion de retenue du butoir et qui est conçue pour être déformée pour permettre le positionnement de l'aile, et une seconde patte de renfort qui est fixée sur la seconde portion de renfort du butoir et qui est conçue pour bloquer l'aile en déplacement en cas de choc.

Ainsi, l'invention permet de positionner précisément l'aile par fixation de la première patte de retenue sur la première portion du butoir, et de bloquer l'aile en déplacement par fixation de la seconde patte de renfort sur la seconde portion du butoir prévue à cet effet.

Selon une autre caractéristique, la seconde patte de renfort présente une longueur inférieure à la première patte de retenue de sorte que la seconde patte offre une rigidité supérieure à la première patte.

Cette caractéristique permet à la seconde patte de renfort de présenter un bras de levier moins important que le bras de levier de la première patte, grâce à quoi la seconde patte exerce un couple de rappel sur l'aile plus important que la première patte de retenue, en cas de choc à l'avant du véhicule.

Selon un autre aspect, la seconde patte de renfort et la seconde portion de renfort associée délimitent un jeu entre elles, avant d'être fixées.

Cette caractéristique vise à empêcher la seconde patte d'entrer en contact avec la seconde portion associée du butoir, afin de ne pas gêner le positionnement et la fixation de la première patte.

De plus, ce jeu est un jeu qui est apte à être résorbé par pliage de la seconde patte de renfort.

Selon une autre caractéristique, la première patte de retenue et la seconde patte de renfort sont réalisées par pliage de l'aile.

Cette caractéristique permet de réaliser en une seule pièce et en une seule opération l'ensemble formé par l'aile, la première patte et la seconde patte.

Aussi, la première patte de retenue et la seconde patte de renfort s'étendent globalement transversalement depuis un bord périphérique de l'aile associée.

De plus, le butoir est agencé au voisinage d'une porte avant du véhicule et la première patte de retenue et la seconde patte de renfort sont agencées sur une partie arrière de l'aile.

Selon une autre caractéristique, le butoir est réalisé en une seule pièce.

De plus, le butoir est globalement de la forme d'une équerre, l'ensemble constitué par la première portion et la seconde portion du butoir étant globalement perpendiculaire à l'embase de fixation.

Enfin, le butoir est fixé sur la paroi de caisse et sur la première patte et la seconde patte par un moyen de fixation du type vis-écrous.

D'autres caractéristiques et avantages de l'invention apparaîtront à la lecture de la description détaillée qui suit pour la compréhension de laquelle on se reportera aux dessins annexés dans lesquels :
- la figure 1 est une vue de détail de côté, qui illustre une partie avant gauche d'un véhicule automobile comportant un pare-choc avant, une aile avant et une porte avant représentée partiellement ;
- la figure 2 est une vue en perspective de détail, qui illustre un butoir qui relie la paroi de caisse sur une première patte et une seconde patte formées chacune par l'aile avant.

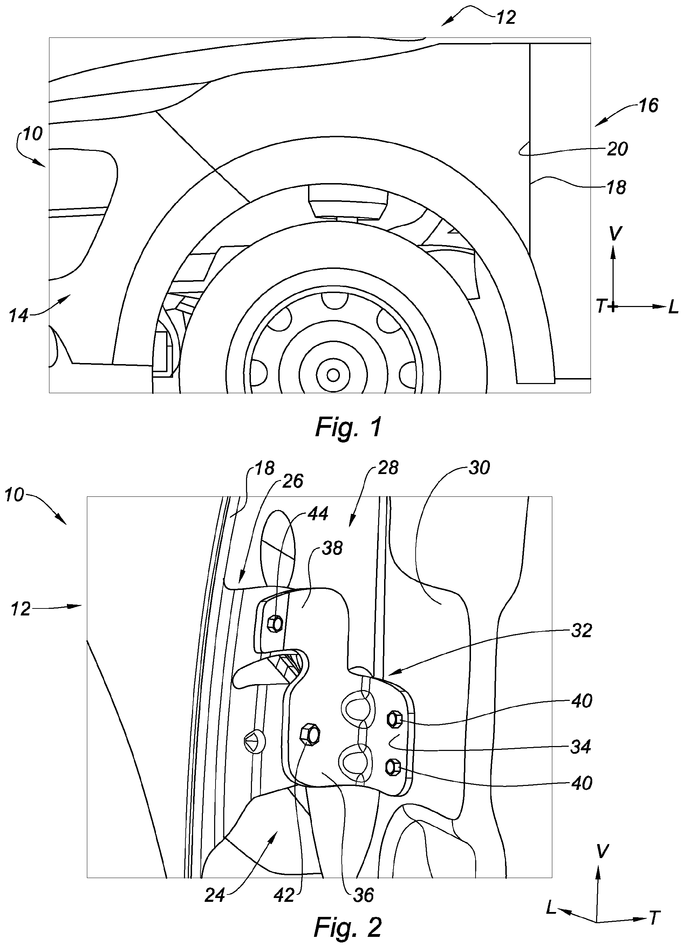

Dans la description et les revendications, on utilisera à titre non limitatif les expressions « supérieur », « inférieur » en référence à la partie supérieure et à la partie inférieure de la figure 1.

De plus, on utilisera à titre non limitatif les expressions « avant » et « arrière » en référence à la partie avant et à la partie arrière du véhicule représenté en partie à la figure 1.

De même, pour clarifier la description et les revendications, on adoptera à titre non limitatif la terminologie longitudinal, vertical et transversal en référence au trièdre L, V, T indiqué aux figures.

On a représenté à la figure 1 une partie avant gauche d'un véhicule 10 automobile qui comporte une aile 12 avant qui est interposée longitudinalement entre un pare-choc 14 avant et une porte 16 avant du véhicule 10.

L'aile 12 délimite un bord périphérique 18 arrière qui s'étend globalement verticalement et qui est agencé de façon affleurante avec un bord avant 20 de la porte 16.

Comme on peut le voir à la figure 2, l'aile 12 comporte une première patte 24 de retenue inférieure et une seconde patte 26 de fixation supérieure qui s'étendent chacune globalement transversalement depuis le bord périphérique 18 de l'aile 12, sur une partie arrière de l'aile 12.

L'aile 12, la première patte 24 et la seconde patte 26 sont ici réalisées en une seule pièce, par exemple par emboutissage et pliage d'une tôle.

On a représenté à la figure 2 un dispositif 28 pour la fixation de l'aile 12 avant sur une paroi 30 de caisse du véhicule 10, l'aile 12 et la paroi 30 de caisse délimitant entre elles un espace transversal.

Le dispositif 28 est équipé d'un butoir 32 qui est globalement de la forme d'une équerre et qui comporte une embase 34 de fixation, une première portion 36 de retenue, et une seconde portion 38 de renfort.

Comme le montre la figure 2, le butoir 32 est réalisé en une seule pièce, par exemple par emboutissage d'une tôle métallique.

Toutefois, à titre non limitatif, le butoir 32 peut être conçu en deux parties dissociées, une première partie formant la première portion 36 de retenue et une seconde partie formant la seconde portion 38 de fixation.

L'embase 34 de fixation est une plaque qui s'étend dans un plan vertical-longitudinal et qui est plaquée et fixée sur la paroi 30 de caisse, ici au moyen d'un ensemble de deux vis-écrous 40.

Le butoir 32 est agencé au voisinage de la porte 16 avant du véhicule 10.

La première portion 36 de retenue du butoir 32 s'étend globalement perpendiculairement à l'embase 34 associée, dans un plan vertical-transversal, depuis l'embase 34.

De plus, la première portion 36 de retenue est plaquée et fixée sur l'extrémité libre de la première patte 24 de retenue de l'aile 12 avant, ici au moyen d'un premier ensemble vis-écrou 42.

La première patte 24 de retenue est conçue pour être déformée, notamment par un opérateur, pour permettre le positionnement de l'aile 12.

Ainsi, l'opérateur est apte à positionner l'aile 12, par exemple au moyen d'un gabarit, puis lorsque l'aile 12 est correctement positionnée, l'opérateur tord la première patte 24 de retenue puis fixe la première patte 24 sur la première portion 36 associée du butoir 32.

De façon complémentaire, la seconde portion 38 de fixation du butoir 32 s'étend globalement perpendiculairement à l'embase 34 associée, dans un plan vertical-transversal, depuis la première portion 36 de retenue.

La seconde portion 38 de fixation est plaquée et fixée sur l'extrémité libre de la seconde patte 26 de retenue de l'aile 12 avant, ici au moyen d'un second ensemble vis-écrou 44.

De plus, la seconde patte 26 de renfort est conçue pour bloquer l'aile 12, notamment en déplacement longitudinal, et pour empêcher l'aile 12 de percuter la porte 16 voisine en cas de choc à l'avant du véhicule.

A cet effet, la seconde patte 26 de renfort présente une longueur inférieure à la première patte 24 de retenue.

Le terme longueur utilisé ci-dessus désigne la longueur d'une patte depuis le bord périphérique 18 de l'aile 12 jusqu'à l'extrémité libre de la patte concernée.

La seconde patte 26 étant plus courte, elle présente un bras de levier inférieur au bras de levier de la première patte 24, en considérant qu'en cas de choc la première patte 24 et la seconde patte 26 sont susceptibles de pivoter autour d'un axe globalement vertical agencé au niveau du bord périphérique 18 de l'aile 12.

Ainsi, la seconde patte 26 offre un couple de rappel et une « rigidité » supérieure à la première patte 24.

En outre, la seconde patte 26 de renfort est conçue pour être déformée, notamment par un opérateur, pour permettre la fixation de la seconde patte 26 sur la seconde portion 38 associée du butoir 32.

Ainsi, après avoir fixé la première patte 24 sur la première portion 36 associée, l'opérateur fixe la seconde patte 26 de renfort sur la seconde portion 38 associée au moyen du second jeu de vis-écrou 44, la seconde patte 26 se pliant sous l'effet du serrage contre la seconde portion 38, sans que l'aile 12 ne change de position.

Selon un autre aspect, la seconde patte 26 de renfort et la seconde portion 38 de renfort associée délimitent un jeu entre elles qui est conçu pour ne pas gêner le positionnement de l'aile 12 lors de la fixation de la première patte 24 sur la première portion 36 associée du butoir 32.

Ce jeu est un jeu globalement longitudinal qui est apte à être résorbé par pliage de la seconde patte 26 de renfort.

Avantageusement, en cas de choc du véhicule, le butoir 32 permet de retenir l'aile 12 pour l'empêcher de percuter la porte 16 voisine.

De plus, en cas de choc plus violent, la première patte 24 et la seconde patte 26 de l'aile 12 sont conçues pour se plier autour d'un axe globalement vertical, de sorte que l'aile 12 pivote.

Cette caractéristique permet de limiter ou d'éviter la collision entre l'aile 12 et la porte 16.

## Revendications

1. Dispositif (28) pour la fixation d'une aile (12) avant sur une paroi (30) de caisse d'un véhicule (10) au moyen d'un butoir (32), l'aile (12) avant et la paroi (30) de caisse délimitant entre elles un espace transversal, le butoir (32) comportant :
- une embase (34) de fixation qui est fixée sur la paroi (30) de caisse,
- une première portion (36) de retenue, et
- une seconde portion (38) de renfort, **caractérisé en ce que** l'aile (12) comporte une première patte (24) de retenue qui est fixée sur la première portion (36) de retenue du butoir (32) et qui est conçue pour être déformée pour permettre le positionnement de l'aile (12), et une seconde patte (26) de renfort qui est fixée sur la seconde portion (38) de renfort du butoir (32) et qui est conçue pour bloquer l'aile (12) en déplacement en cas de choc.

2. Dispositif (28) pour la fixation d'une aile (12) avant selon la revendication 1, **caractérisé en ce que** la seconde patte (26) de renfort présente une longueur inférieure à la première patte (24) de retenue de sorte que la seconde patte (26) offre une rigidité supérieure à la première patte (24).

3. Dispositif (28) pour la fixation d'une aile (12) avant selon l'une quelconque des revendications précédentes, **caractérisé en ce que** la seconde patte (26) de renfort et la seconde portion (38) de renfort associée délimitent un jeu entre elles, avant d'être fixées.

4. Dispositif (28) pour la fixation d'une aile (12) avant selon la revendication 3, **caractérisé en ce que** ledit jeu est un jeu qui est apte à être résorbé par pliage de la seconde patte (26) de renfort.

5. Dispositif (28) pour la fixation d'une aile (12) avant selon l'une quelconque des revendications précédentes, **caractérisé en ce que** la première patte (24) de retenue et la seconde patte (26) de renfort sont réalisées par pliage de l'aile (12).

6. Dispositif (28) pour la fixation d'une aile (12) avant selon l'une quelconque des revendications précédentes, **caractérisé en ce que** la première patte (24) de retenue et la seconde patte (26) de renfort s'étendent globalement transversalement depuis un bord périphérique (18) de l'aile (12) associée.

7. Dispositif (28) pour la fixation d'une aile (12) avant selon l'une quelconque des revendications précédentes, **caractérisé en ce que** le butoir (32) est agencé au voisinage d'une porte (16) avant du véhicule (10) et **en ce que** la première patte (24) de retenue et la seconde patte (26) de renfort sont agencées sur une partie arrière de l'aile (12).

8. Dispositif (28) pour la fixation d'une aile (12) avant selon l'une quelconque des revendications précédentes, **caractérisé en ce que** le butoir (32) est réalisé en une seule pièce.

9. Dispositif (28) pour la fixation d'une aile (12) avant selon l'une quelconque des revendications précédentes, **caractérisé en ce que** le butoir (32) est globalement de la forme d'une équerre, l'ensemble constitué par la première portion (36) et la seconde portion (38) du butoir (32) étant globalement perpendiculaire à l'embase (34) de fixation.

10. Dispositif (28) pour la fixation d'une aile (12) avant selon l'une quelconque des revendications précédentes, **caractérisé en ce que** le butoir (32) est fixé sur la paroi (30) de caisse et sur la première patte (24) et la seconde patte (26) par un moyen de fixation du type vis-écrous.

## Patentansprüche

1. Vorrichtung (28) zur Befestigung eines Vorderflügels (12) an einer Karosseriewand (30) eines Fahrzeugs (10) mit Hilfe eines Anschlags (32), wobei der Vorderflügel (12) und die Karosseriewand (30) zwischen sich einen transversalen Raum begrenzen, wobei der Anschlag (32) aufweist:
- eine Befestigungsbasis (34), die auf der Karosseriewand (30) befestigt ist,
- einen ersten Halteabschnitt (36) und
- einen zweiten Verstärkungsabschnitt (38), **dadurch gekennzeichnet, dass** der Flügel (12) eine erste Haltezunge (24), die auf dem ersten Halteabschnitt (36) des Anschlags (32) befestigt ist und die verformend ausgebildet ist, um die Positionierung des Flügels (12) zu erlauben, und eine zweite Verstärkungszunge (26), die auf dem zweiten Verstärkungsabschnitt (38) des Anschlags (32) befestigt ist und die ausgebildet ist, um die Verlagerung des Flügels (12) bei einem Aufprall zu blockieren, aufweist.

2. Vorrichtung (28) zur Befestigung eines Vorderflügels (12) nach Anspruch 1, **dadurch gekennzeichnet, dass** die zweite Verstärkungszunge (26) kürzer ist als die erste Haltezunge (24), so dass die zweite Zunge (26) eine höhere Steifigkeit aufweist als die erste Zunge (24).

3. Vorrichtung (28) zur Befestigung eines Vorderflügels (12) nach einem der vorangehenden Ansprüche, **dadurch gekennzeichnet, dass** die zweite Verstärkungszunge (26) und der zugeordnete zweite Verstärkungsabschnitt (38) vor der Befestigung ein Spiel zwischen sich begrenzen.

4. Vorrichtung (28) zur Befestigung eines Vorderflügels (12) nach Anspruch 3, **dadurch gekennzeichnet, dass** das Spiel ein Spiel ist, das durch Falten der zweiten Verstärkungszunge (26) resorbierbar ist.

5. Vorrichtung (28) zur Befestigung eines Vorderflügels (12) nach einem der vorangehenden Ansprüche, **dadurch gekennzeichnet, dass** die erste Haltezunge (24) und die zweite Verstärkungszunge (26) durch Falten des Flügels (12) realisiert sind.

6. Vorrichtung (28) zur Befestigung eines Vorderflügels (12) nach einem der vorangehenden Ansprüche, **dadurch gekennzeichnet, dass** sich die erste Haltezunge (24) und die zweite Verstärkungszunge (26) ab einem Umfangsrand (18) des zugeordneten Flügels (12) global transversal erstrecken.

7. Vorrichtung (28) zur Befestigung eines Vorderflügels (12) nach einem der vorangehenden Ansprüche, **dadurch gekennzeichnet, dass** der Anschlag (32) in der Nähe einer vorderen Tür (16) des Fahrzeugs (10) ausgebildet ist und dass die erste Haltezunge (24) und die zweite Verstärkungszunge (26) auf einem hinteren Teil des Flügels (12) ausgebildet sind.

8. Vorrichtung (28) zur Befestigung eines Vorderflügels (12) nach einem der vorangehenden Ansprüche, **dadurch gekennzeichnet, dass** der Anschlag (32) in einem einzigen Teil realisiert ist.

9. Vorrichtung (28) zur Befestigung eines Vorderflügels (12) nach einem der vorangehenden Ansprüche, **dadurch gekennzeichnet, dass** der Anschlag (32) global die Form eines Winkels hat, wobei die von dem ersten Abschnitt (36) und dem zweiten Abschnitt (38) des Anschlags (32) gebildete Einheit global senkrecht zur Befestigungsbasis (34) ist.

10. Vorrichtung (28) zur Befestigung eines Vorderflügels (12) nach einem der vorangehenden Ansprüche, **dadurch gekennzeichnet, dass** der Anschlag (32) auf der Karosseriewand (30) und auf der ersten Zunge (24) und der zweiten Zunge (26) mit Hilfe eines Befestigungsmittels vom Typ SchraubenMuttern befestigt ist.

## Claims

1. Device (28) for fixing a front wing (12) on a bodywork wall (30) of a vehicle (10) by means of a buffer (32), the front wing (12) and the bodywork wall (30) delimiting a transverse space between them, the buffer (32) comprising:
- a fixing base (34) that is fixed to the bodywork wall (30),
- a first retaining portion (36), and
- a second reinforcing portion (38), **characterised in** the wing (12) comprises a first retaining lug (24) that is fixed to the first retaining portion (36) of the buffer (32) and is designed so as to be deformed to allow the positioning of the wing (12), and a second reinforcing lug (26) that is fixed to the second reinforcing portion (38) of the buffer (32) and is designed to lock the wing (12) with respect to movement in the event of impact.

2. Device (28) for fixing a front wing (12) according to claim 1, **characterised in that** the second reinforcing lug (26) has a length less than the first retaining lug (24) so that the second lug (26) offers superior rigidity to the first lug (24).

3. Device (28) for fixing a front wing (12) according to any of the preceding claims, **characterised in that** the second reinforcing lug (26) and the associated second reinforcing portion (38) delimit a clearance between, before being fixed.

4. Device (28) for fixing a front wing (12) according to claim 3, **characterised in that** said clearance is a clearance that is able to be reduced by bending of the second reinforcing lug (26).

5. Device (28) for fixing a front wing (12) according to any of the preceding claims, **characterised in that** the first retaining lug (24) and the second reinforcing lug (26) are produced by bending the wing (12).

6. Device (28) for fixing a front wing (12) according to any of the preceding claims, **characterised in that** the first retaining lug (24) and the second reinforcing lug (26) extend roughly transversely from a peripheral edge (18) of the associated wing (12).

7. Device (28) for fixing a front wing (12) according to any of the preceding claims, **characterised in that** the buffer (32) is arranged in the vicinity of a front door (16) of the vehicle (10) and **in that** the first retaining lug (24) and the second reinforcing lug (26) are arranged on a rear part of the wing (12).

8. Device (28) for fixing a front wing (12) according to any of the preceding claims, **characterised in that** the buffer (32) is produced in a single piece.

9. Device (28) for fixing a front wing (12) according to any of the preceding claims, **characterised in that** the buffer (32) is roughly in the form of a square bracket, the assembly formed by the first portion (36) and the second portion (38) of the buffer (32) being roughly perpendicular to the fixing base (34).

10. Device (28) for fixing a front wing (12) according to any of the preceding claims, **characterised in that** the buffer (32) is fixed to the bodywork wall (30) and to the first lug (24) and the second lug (26) by a fixing means of the screw and nut type.
